(19) Europäisches Patentamt
European Patent Office
Office européen des brevets

(11) **EP 3 523 661 B1**

(12) **EUROPÄISCHE PATENTSCHRIFT**

(45) Veröffentlichungstag und Bekanntmachung des Hinweises auf die Patenterteilung:
**16.03.2022 Patentblatt 2022/11**

(21) Anmeldenummer: **17793833.9**

(22) Anmeldetag: **09.10.2017**

(51) Internationale Patentklassifikation (IPC):
**G01P 5/00** *(2006.01)*

(52) Gemeinsame Patentklassifikation (CPC):
**G01P 5/00;** Y02T 10/72

(86) Internationale Anmeldenummer:
**PCT/EP2017/001190**

(87) Internationale Veröffentlichungsnummer:
**WO 2018/065096 (12.04.2018 Gazette 2018/15)**

(54) **WINDMESSUNG MITTELS EINES MULTIKOPTERS**

WIND MEASUREMENT BY MEANS OF A MULTICOPTER

ANÉMOMÉTRIE AU MOYEN D'UN MULTICOPTÈRE

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **07.10.2016 DE 102016119152**

(43) Veröffentlichungstag der Anmeldung:
**14.08.2019 Patentblatt 2019/33**

(73) Patentinhaber: **Cavos Bagatelle Verwaltungs GmbH & Co. KG**
**80538 München (DE)**

(72) Erfinder:
• **TOMIC, Teodor**
**80687 München (DE)**
• **LUTZ, Philipp**
**82205 Gilching (DE)**
• **HADDADIN, Sami**
**30173 Hannover (DE)**

(74) Vertreter: **Rösler Rasch van der Heide & Partner**
**Bodenseestraße 18**
**81241 München (DE)**

(56) Entgegenhaltungen:
**US-A- 5 214 596    US-A1- 2016 214 715**

• **TOMIC TEODOR ET AL: "Simultaneous estimation of aerodynamic and contact forces in flying robots: Applications to metric wind estimation and collision detection", 2015 IEEE INTERNATIONAL CONFERENCE ON ROBOTICS AND AUTOMATION (ICRA), IEEE, 26. Mai 2015 (2015-05-26), Seiten 5290-5296, XP033169104, DOI: 10.1109/ICRA.2015.7139937 [gefunden am 2015-06-29] in der Anmeldung erwähnt**
• **TOMIC TEODOR ET AL: "The flying anemometer: Unified estimation of wind velocity from aerodynamic power and wrenches", 2016 IEEE/RSJ INTERNATIONAL CONFERENCE ON INTELLIGENT ROBOTS AND SYSTEMS (IROS), IEEE, 9. Oktober 2016 (2016-10-09), Seiten 1637-1644, XP033011614, DOI: 10.1109/IROS.2016.7759264 [gefunden am 2016-11-28]**

EP 3 523 661 B1

**Beschreibung**

Die Erfindung betrifft einen Multikopter, mit dem Windmessungen durchführbar sind, sowie ein Verfahren zur Windmessung mittels eines Multikopters.

Die vorliegende Erfindung betrifft einen Multikopter, d.h. eine durch mehrere Propeller angetriebene freifliegende Drohne bzw. einen frei fliegenden Roboter, die/der zur Windmessung genutzt wird. Im Stand der Technik sind Multikopter bekannt, die zur Windmessung eingerichtet sind. So geht aus der Veröffentlichung: "Simultaneous Estimation of Aerodynamic and Contact Forces in Flying Robots: Application to Metric Wind Estimations and Collision Detection", ICRA 2015, Seattle, WA USA May 2015, Seiten: 5290-5296 der vorliegenden Erfinder: Tomic T., und Haddadin S. ein Multikopter hervor, der aufgrund einer Schätzung eines externen auf den Multikopter einwirkenden Kraftwinders $\tau_e$ die Schätzung einer Windgeschwindigkeit ermöglicht. Die Offenbarung dieses Artikels, insbesondere der Kapitel: "III Modeling" und "IV Incorporating Aerodynamics into external Wrench Estimation" beschreibt im Detail, wie eine solche Schätzung ermöglicht wird.

In dem Artikel "Aerodynamic Power Control for Multirotor Aerial Vehicles" von Bangura M. et al., in: IEEE International Conference on Robotics and Automation (ICRA), 31.05.-07.06.2014 Hong Kong China, wird eine Steuerung eines Multikopters offenbart, die ein robustes Verhalten gegenüber Windstörungen und Bodeneffekten aufweist.

Aus der US 8,219,267 B2 ist ein Verfahren bekannt, mit dem die Windgeschwindigkeit während des Betriebs eines UAVs geschätzt werden kann.

Die Aufgabe der vorliegenden Erfindung ist es, einen Multikopter bzw. ein Verfahren zum Betrieb eines Multikopters anzugeben, mit dem eine verbesserte Windmessung möglich ist.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Sind die Propellerebenen im Wesentlichen parallel und insbesondere in einer Ebene angeordnet, so ergibt sich folgender Spezialfall.

Ein Aspekt der Erfindung betrifft einen Multikopter aufweisend: eine Anzahl N Elektromotoren $MOT_n$ zum Antrieb von N Propellern $PROP_n$, mit n = 1, 2, ..., N und N $\geq$ 2, eine erste Schnittstelle zur Bereitstellung von ersten Parametern P1 umfassend: eine 3D-Position $r_B = (x_b, y_b, z_b)$ des Schwerpunktes B des Multikopters (oder Bereitstellung von Informationen aus denen die Position $r_B = (x_b, y_b, z_b)$ des Schwerpunktes B des Multikopters ermittelbar/schätzbar ist), die Zeitableitungen: $r_B$ und $\dot{r}_B$, eine 3D-Orientierung $o_M = (\alpha_M, \beta_m, \gamma_M)$ des Multikopters sowie deren Zeitableitung $\dot{o}_M$ (die Größen $r_B$, $\dot{r}_B$, $o_M = (\alpha_M, \beta_M, \gamma_M)$, $\dot{o}_M$ werden vorteilhaft gemessen (bspw. mittels GPS, LIDAR, Kameras, etc. einen oder mehreren inertialen Messeinheiten (IMU)) etc., beobachtet oder abgeleitet werden (bspw. durch visuelle Odometrie, Sensordatenfusion wie Kalman-Filter etc. )), eine zweite Schnittstelle zur Bereitstellung einer von den Propellern $PROP_n$ jeweils aktuell erzeugten aerodynamischen Leistung $P_{a,n}$ (die vorteilhaft gemessen oder beobachtet wird), eine erste Einheit, die auf Basis der ersten Parameter P1, auf Basis eines bereitgestellten Modells M1 zur Beschreibung einer Dynamik des Multikopters, und einer auf Basis des Modells M1 ermittelten Schätzung eines auf den Multikopter extern einwirkenden Kraftwinders $\tau_e$ Horizontalkomponenten $(v_{r,x}, v_{r,y})$ einer Relativgeschwindigkeit $v_r := (v_{r,x}, v_{r,y}, v_{r,z})^T$ des Multikopters zur Luft ermittelt (hierzu werden vorteilhaft Funktionsapproximatoren, die aus dem Bereich "maschinelles Lernen" bekannt sind verwendet, wie z.B. lineare Regression, neuronale Netze, mehrschichtige Perzeptronen, support vector machines (SVM) etc.), eine zweite Einheit, die auf Basis der ermittelten Horizontalkomponenten $(v_{r,x}, v_{r,y})$ sowie auf Basis der aerodynamischen Leistung $P_{a,n}$ die Vertikalkomponente $(v_{r,z})$ der Relativgeschwindigkeit $v_r$ ermittelt, eine Einheit, die auf Basis der ermittelten Horizontalkomponenten $(v_{r,x}, v_{r,y})$, der Vertikalkomponente $(v_{r,z})$ sowie auf Basis der Parameter P1 die Windgeschwindigkeit $v_w$ in einem Inertialsystem ermittelt, eine Speichereinheit zur Speicherung der für die Orte $r_B$ ermittelten Windgeschwindigkeiten $v_w(r_B) = (v_{w,x}(r_B), v_{w,y}(r_B), v_{w,z}(r_B))$ und/oder eine Übertragungseinheit zur drahtlosen Übertragung der Windgeschwindigkeit $v_w(r_B)$ an einen Empfänger.

Der Begriff "Multikopter" beschreibt vorliegend ein Luftfahrzeug, das zwei oder mehr Antriebseinheiten, insbesondere motorgetriebene Propeller, aufweist. Der Multikopter kann auch Auftriebs- und oder Steuerflächen aufweisen. Die Anordnung der N Propeller $PROP_n$ am Multikopter ist prinzipiell beliebig. Jeder Propeller wird vorteilhaft in seinem eigenen Koordinatensystem beschrieben. Die N Propeller $PROP_n$ sind vorteilhaft vektorierbar, d.h. jeder Propeller kann in einem eigenen zeitveränderlichen Koordinatensystem beschrieben sein. Demnach kann das Verfahren grundsätzlich auf andere Anordnungen verallgemeinert werden, in denen nicht notwendigerweise die Anordnung der Propeller in einer Ebene ist. Die entsprechend nötige Kombinationen der Schätzer ist offensichtlich aus dem beschriebenen gängigen Fall ableitbar.

Grundsätzlich kann das vorgeschlagene Verfahren in anderen Worten eine Regression von dem externen Kraftwinder $\tau_e$ auf die Relativgeschwindigkeit $v_r$, eine Regression von den aerodynamischen Leistungen $P_{a,n}$ auf die Relativgeschwindigkeit $v_r$, und/oder eine Regression von dem externen Kraftwinder $\tau_e$ und den aerodynamischen Leistungen $P_{a,n}$ auf die Relativgeschwindigkeit $v_r$ ausführen.

Vorteilhaft gilt dabei der Zusammenhang: $v_r = r_B - v_w$, mit:$v_r := (v_{r,x},\ v_{r,y},\ v_{r,z})^T :=$ Relativgeschwindigkeit des Multikopters zur Luft, und $v_w := (v_{w,x},\ v_{w,y},\ v_{w,z})^T$ Windgeschwindigkeit.

Der vorgeschlagene Multikopter nutzt somit lediglich zur Ermittlung der Horizontalkomponenten ($v_{r,x},\ v_{r,y}$) der Relativgeschwindigkeit $v_r$ den in dem einleitend angegebenen Artikel offenbarten Ansatz, bei dem basierend auf einem Modell zur Dynamik des Multikopters und einer damit erzeugten Schätzung eines extern auf den Multikopter einwirkenden Kraftwinders $\tau_e$ eine Schätzung der Relativgeschwindigkeit $v_r$ erfolgt.

Die Ermittlung der Vertikalkomponente ($v_{r,z}$) der Relativgeschwindigkeit $v_r$ erfolgt vorliegend auf Basis der Ermittlung der aerodynamischen Leistung der jeweiligen Motor-Propellerkombinationen sowie auf Basis der zuvor ermittelten Horizontalkomponenten ($v_{r,x},\ v_{r,y}$) der Relativgeschwindigkeit $v_r$. Der vorgeschlagene Multikopter ermöglicht dadurch eine genauere und robustere Ermittlung von Windgeschwindigkeiten während des Fluges. Er kann somit insbesondere als fliegender Windsensor eingesetzt werden, der die ermittelten Winddaten an Bord speichert und/oder an eine Bodenstation überträgt. Nachfolgend werden einige Zusammenhänge und mathematische Grundlagen dargestellt, die der Erläuterung und der Umsetzung der Erfindung dienen.

I. Bewegungsgleichungen (Starrkörpermechanik)

Die für den vorliegenden Multikopter geltenden Bewegungsgleichungen können grundsätzlich wie folgt formuliert werden:

$$\text{(Gl1)} \qquad m\ddot{r} = mge_3 + Rf + Rf_e$$

$$\text{(Gl2)} \qquad I\dot{\omega} = (I\omega) \times \omega - mg(r_g) \times R^T e_3 + \overline{m} + \overline{m}_e$$

$$\text{(Gl3)} \qquad \dot{R} = R(\omega) \times$$

mit:

m:    Masse des Multikopters

$r_B = (x,y,z)^T$:    Position des Multikopters in einem fixierten Nord-Ost-Unten Inertialsystem

$R \in SO(3)$:    Rotationsmatrix von einem Multikopter-Bezugssystem zu dem Inertialsystem

$I \in \mathfrak{R}^{3 \times 3}$ :    Trägheitsmoment des Multikopters

$(\cdot)^x$:    Skew-Symmetric-Matrix Operator

g:    Erdbeschleunigung

$\omega$:    Winkelgeschwindigkeit des Multikopters

$e_3$:    Einheitsvektor der z-Achse im Inertialsystem

$r_g$:    Position des Massenschwerpunktes des Multikopters im Multikopter-Bezugssystem

f:    Soll-Kraft im Multikopter-Bezugssystem

$f_e$:    auf den Multikopter wirkende externe Kraft im Multikopter-Bezugssystem

$\overline{m}$:    Soll-Moment im Multikopter-Bezugssystem

$\overline{m}_e$:    auf den Multikopter wirkendes extern einwirkendes Moment im Multikopter-Bezugssystem.

Dabei seien der von den Propeller-Elektromotoreinheiten erzeugte Soll-Kraftwinder $\tau = [f^T, \overline{m}^T]^T$ und der extern auf den Multikopter wirkende Kraftwinder $\tau_e = \left[ f_e^T, \overline{m}_e^T \right]^T$. Allgemein hängt $\tau = [f^T, \overline{m}^T]^T$ von der Freistromgeschwindigkeit $v_\infty$ und der Propellerdrehzahl $\overline{\omega}$ ab. Unter dem Begriff "Freistromgeschwindigkeit" $v_\infty$ wird vorliegend die Geschwindigkeit einer Luftströmung verstanden, die unbeeinflusst von dem Multikopter ist.

II. Schätzung des externen Kraftwinders

Die Schätzung des extern auf den Multikopter wirkenden Kraftwinders $\tau_e = \left[ f_e^T, \overline{m}_e^T \right]^T$ erfolgt vorteilhaft auf

Basis folgender Zusammenhänge:

$$(GI4) \quad \hat{\tau}_e = \begin{bmatrix} \int_0^t K_I^f (ma - f - \hat{f}_e)dt \\ K_I^m (I\omega - \int_0^t (m + (I\omega) \times \omega - mg(r_g) \times R^T e_3 - \overline{\hat{m}_e})dt \end{bmatrix}$$

mit:

$K_I^f$ und $K_I^m$: Verstärkungsfaktoren von Filtern

$a = R^T(\ddot{r} - g e_3)$: im Bezugssystem des Multikopters gemessene Beschleunigung

$\hat{f}_e$ und $\hat{m}_e$: geschätzte auf den Multikopter einwirkende externe Kraft bzw. externes Moment.

Nähere Ausführungen hierzu ergeben sich bspw. aus dem Artikel von Tomic T., "Evaluation of acceleration-based disturbance observation for multicopter control" in European Control Conference (ECC), 2014, Seiten 2937-2944.

III. Propelleraerodynamik

Die auf einen Propeller des Multikopters wirkenden Kräfte hängen von der Freistromgeschwindigkeit $v_\infty$ (relative Windgeschwindigkeit) ab. Die Freistromgeschwindigkeit $v_\infty$ des $n$-ten Propellers in einem Bezugssystem des Propellers kann wie folgt ausgedrückt werden:

$$(GI5) \quad v_\infty^{(n)} = R_{pb}^{(n)} (R_{bi}^{(n)} v_r + \omega \times r_n)$$

wobei $v_r = \dot{r}_B - v_w$ die wahre Luftgeschwindigkeit des Multikopters, $v_w$ die Windgeschwindigkeit, $R_{bi}^{(n)}$ die Rotationsmatrix vom Inertialsystem zum Bezugssystem des Multikopters, $R_{pb}^{(n)}$ die Rotationsmatrix vom Bezugssystem des Multikopters zum Bezugssystem des Propellers, $\omega$ die Winkelgeschwindigkeit des Multikopters und $r_n$ die Position des jeweiligen Propellers relativ zum Bezugssystem des Multikopters ist. Aufgrund der Impulserhaltung ergibt sich für den vom n-ten Propeller erzeugten Schub $T$

$$(GI6) \quad T = 2\rho A v_i U$$

mit: $p$:= Luftdichte, $A$:= vom Propeller überstrichene Fläche und $U = \|v_i e_3 + v_\infty\|$ die vom Propeller insgesamt erzeugte Nachlaufströmung. Die vom Propeller induzierte Strömungsgeschwindigkeit $v_i$ kann vorteilhaft wie folgt ermittelt werden:

$$(GI7) \quad v_i = v_h^2 / \sqrt{v_{xy}^2 + (v_i - v_z)^2}$$

Vorteilhaft erfolgt die Lösung mittels eines Newton-Raphson-Verfahrens in wenigen Schritten bei bekanntem $v_h$ und $v_\infty$. Für die horizontale und die vertikale Komponente der Freistromgeschwindigkeit gilt: $v_{xy} = v_\infty - v_z$ und $v_z = e_3^T v_\infty$. Im Schwebeflug gilt für die induzierte Geschwindigkeit: $v_i = v_h = \sqrt{T_h / 2 \rho A}$, wobei sich der Schwebeflug-Schub $T_h$ aus $T_h = \rho D^4 C_T \omega^2$ ergibt. Der Schubkoeffizient $C_T$ wird vorteilhaft aus statischen Schubmessungen ermittelt. D gibt den Durchmesser des jeweiligen Propellers und $\omega$ die Propellerdrehgeschwindigkeit an. Die ideale aerodynamische Propellerleistung ist gegeben durch:

$$(GI8) \quad P_a = 2\rho A v_i U(v_i - v_z)$$

Die aerodynamische Leistung im Vorwärtsflug bezogen auf die Schwebeflugleistung ist:

$$(Gl9) \quad P_a/P_h = (v_i - v_z)/v_h$$

gegeben durch $P_h = 2\rho A v_h^3$. Abweichungen vom Idealverhalten können durch Einführung eines Faktors FM zwischen 0 und 1 berücksichtigt werden. Der Zusammenhang zwischen aerodynamischer Leistung $P_a$ einer Antriebseinheit (Elektromotor und Propeller) und der von einem Elektromotor erzeugten Motorleistung $P_M$ ergibt sich dabei zu: $P_a = P_M \cdot$FM.

IV. Modell zur Beschreibung eines bürstenlosen DC Elektromotors

Um die aerodynamische Leistung eine Antriebseinheit abzuschätzen, wird vorteilhaft folgendes dynamische Motor-Modell verwendet.

$$(Gl10) \quad \tau_m = (K_{q0} - K_{q1}i_a)i_a$$

$$(Gl11) \quad I_r \dot{\varpi}_E = \tau_m - D_r$$

mit: $i_a$:= Motorstrom, $\overline{\omega}_E$:= Winkelgeschwindigkeit des Elektromotors, $\tau_m$:= Drehmoment des Elektromotors, wobei der Drehmomentfaktor $K_q(i_a)$ vorteilhaft wie folgt modelliert ist:

$K_q(i_a) = (K_{q0} - K_{q1}i_a)$ mit den Konstanten: $K_{q0}, K_{q1}$. $I_r$ ist das Trägheitsmoment des Elektromotor-Rotors und $D_r$ ist das aerodynamische Reibungsmoment, das auf den Motor wirkt. Die totale vom Elektromotor abgegebene mechanische Leistung ergibt sich zu:

$P_m = P_a$/FM $+ P_r$, mit $P_m$:= mechanische Leistung des Elektromotors und $P_r$:= Leistung, die zur Beschleunigung des Elektromotor-Rotors erforderlich ist, wird zur Ermittlung einer Schätzung der aerodynamischen Leistung $P_a$ vorteilhaft wie folgt verwendet:

$$(Gl12) \quad P_m = \tau_m \varpi_E = (K_{q0} - K_{q1}i_a)i_a \varpi_E$$

$$(Gl13) \quad P_r = I_r \dot{\varpi}_E \varpi_E$$

$$(Gl14) \quad P_a = \text{FM}((K_{q0} - K_{q1}i_a)i_a - I_r \dot{\varpi}_E)\varpi_E$$

Zusammengefasst bedeutet das, dass der Motorstrom $i_a$ gemessen oder geschätzt wird.

Die Größen $\overline{\omega}_E$ und $\dot{\overline{\omega}}_E$ können ebenfalls gemessen oder abhängig von $i_a$ geschätzt werden.

V. Schätzung der Windgeschwindigkeit $v_w$ basierend auf der Ermittlung eines externen Kraftwinders $\tau_e$

Wie in dem eingangs genannten Artikel ausgeführt, kann die Windgeschwindigkeit basierend auf dem extern auf den Multikopter einwirkenden Kraftwinder $\tau_e$ ermittelt werden. Dabei wird angenommen, dass der Kraftwinder $\tau_e$ sich ausschließlich auf aerodynamische $\tau_d$ Reibungskräfte zurückführen lässt: $\tau_e = \tau_d$, sodass das zugrunde liegende aerodynamische Modell M1 lediglich invertiert werden muss: $\tau_d = d(v_r)$. Für einfache aerodynamische Modelle kann dies über eine simple Relation oder Iteration erfolgen. Legt man beispielsweise ein lineares Modell M1 zugrunde, so gilt beispielsweise:

$$(Gl15) \quad d(v_r) = D_l v_r \sum \varpi^{(n)}$$

mit $D_l$:= lineare Koeffizientenmatrix. Bei Verwendung von $\hat{f}_e = d(v_r)$ ergibt sich:

$$\text{(Gl16)} \qquad v_r(d) = \frac{1}{\sum \varpi_i} D \hat{f}_e$$

mit: $D$:= eine Koeffizientenmatrix. Dieses einfache Modell impliziert weiterhin, dass der Multikopter eine symmetrische Form aufweist.

Alternativ kann ein lernbasierter Ansatz verfolgt werden. Die vorstehende Relation kann auch mittels eines Radial-Basis-Funktion (RBF) neuronalen Netzwerks modelliert werden. Dies hat den Vorteil, dass die inverse Relation direkt in der Radial-Basis-Funktion codiert ist. Vorteilhaft modelliert man die Relation $v_r = d^{-1}(\tau_e)$ als normalisiertes RBF-Netzwerk mit K Basisfunktionen:

$$\text{(Gl17)} \qquad v_r = \frac{1}{\varphi_\Sigma} W \varphi(\tau_e)$$

mit: $W \in \Re^{3 \times K}$ := Matrix mit Gewichtungskonstanten der RBF's für jede Geschwindigkeitskomponente:

$$\text{(Gl18)} \qquad W = \begin{bmatrix} w_x^T \\ w_y^T \\ w_z^T \end{bmatrix} = \begin{bmatrix} W_{x,1} & \dots & W_{x,K} \\ W_{y,1} & \dots & W_{y,K} \\ W_{z,1} & \dots & W_{z,K} \end{bmatrix}$$

und mit: $\varphi = [\varphi(r_1),\dots,\varphi(r_K)]^T$ der evaluierten Basisfunktionen. Das Netzwerk ist vorteilhaft normalisiert durch den Faktor: $\varphi_\Sigma = \sum_{i=1}^{K} \varphi(r_i)$. Vorteilhaft nutzt man Gaußsche Basisfunktionen:

$$\text{(Gl19)} \qquad \varphi(r_i) = \exp\left(-\frac{1}{\sigma^2} \|x - c_i\|^2\right)$$

mit $\sigma$:= Formparameter, x:= der ermittelte Vektor und $c_i$:= das Zentrum der $i$-ten Basisfunktion.

VI. Windmessungen auf Basis von ermittelten aerodynamischen Leistungen der Antriebseinheiten jeweils bestehend aus Propeller und Elektromotor

Ausgehend von den Gleichungen (Gl7), (Gl8) und (Gl9) kann die Aerodynamik für einen Propeller als System nichtlinearer Gleichungen $F(v_{r,z}, v_{r,xy}, v_i, v_h, P_a) = 0$ und $F = [F_1, F_2, F_3]^T$ formuliert werden, mit:

$$\text{(Gl21)} \qquad F_1 = v_i^4 - 2v_i^3 v_{r,z} + v_i^2(v_{r,xy}^2 + v_{r,z}^2) - v_h^4 = 0$$

$$F_2 = v_i U(v_i - v_{r,z}) - P_a/(2\rho A_n) = 0$$

$$F_3 = v_h^2(v_i - v_{r,z}) - P_a/(2\rho A_n) = 0$$

Es sei unterstellt, dass $P_a/(2\rho A)$ und $v_h$ bekannt sind und der Vektor $x = [v_{r,x}, v_{r,y}, v_{r,z}, v_i]^T$ ermittelt werden soll. Das vorstehend angeführte System nichtlinearer Gleichungen (Gl21) ist unterbestimmt, da drei unbekannte und nur zwei bekannte Größen vorliegen (dabei sind die Horizontalkomponenten $v_{r,x}$ und $v_{r,y}$ in $v_{r,xy}$ gekoppelt. Dadurch ergibt sich eine Vielheit von Lösungen des Gleichungssystems (Gl21). Um dieses Minimierungsproblem zu lösen, wird vorgeschlagen, das System der Gleichungen (Gl21) derart zu erweitern, dass eine Vielzahl (Anzahl K) von "Messungen" von $P_a$ in das Gleichungssystem integriert wird.

Insgesamt werden also K Messungen zur Ermittlung der aerodynamischen Leistung $P_{a,n}$ durchgeführt. Die aerodynamische Leistung $P_{a,n}$ kann dabei beispielsweise K-mal für einen einzelnen Elektromotor und dessen Propeller durchgeführt werden. Vorteilhaft erfolgen die K "Messungen" der aerodynamischen Leistung $P_{a,n}$ für zwei oder mehr unterschiedliche Elektromotoren und deren Propeller. Schließlich erfolgt für die K verschiedenen Messungen eine Transformation des Gleichungssystems (GI21) in ein gemeinsames Bezugssystem. Dies erlaubt grundsätzlich die Schätzung aller drei Komponenten der relativen Windrichtung sowie der vom Propeller induzierten Windgeschwindigkeit $v_i$ durch Lösen des nichtlinearen quadratischen Minimierungsproblems (GI21).

Dabei wird unterstellt, dass während der K "Messungen" der aerodynamischen Leistung $P_a$ die Windgeschwindigkeit $v_w = [v_{w,x}, v_{w,y}, v_{w,z}]$ gleich bleibt. Werden die $K$ Messungen in einem genügend kurzen Zeitraum durchgeführt, so ist diese Annahme hinreichend berechtigt. Hinreichend genaue Windmessungen erfordern K Ermittlungen der aerodynamischen Leistung, wobei es ausreichend ist K vorteilhaft $\leq 10$, oder $K$ vorteilhaft im Bereich von 3 bis 8 zu wählen. Je höher K gewählt wird, desto größer ist der Rechenaufwand und damit einhergehend auch der Zeitraum in dem Messungen durchgeführt werden, sodass mit einem länger werdenden Zeitraum die Wahrscheinlichkeit einer Variation des Windes in dem Zeitraum steigt.

Vorteilhaft werden an den $N$ Elektromotor-Propellereinheiten gleichzeitig N Messungen bzw. Ermittlungen der aerodynamischen Leistung $P_a$ durchgeführt. Wird beispielsweise $K = 8$ gewählt und besitzt der Multikopter vier Antriebseinheiten, so werden je Antriebseinheit nur zwei nacheinander folgende "Messungen" der aerodynamischen Leistung $P_a$ benötigt. Vorteilhaft können "Messungen" der aerodynamischen Leistung $P_a$ von einer Vielzahl von Posen des Multikopters zu unterschiedlichen Zeitpunkten in einem kleinen Zeitfenster kombiniert werden. Sofern der Flug des Multikopters nicht aggressiv ist, d.h. dass die Orientierung des Multikopters sich im Messzeitraum nicht signifikant ändert, kann die Freistromgeschwindigkeit $v_\infty$ im Bezugssystem des Multikopters hinreichend genau geschätzt werden. Insgesamt werden also K "Messungen" der aerodynamischen Leistung $P_a$ durchgeführt, um vorliegend die Vertikalkomponente $[v_{w,z}]$ der Windrichtung $v_w$ zu ermitteln.

Der für $K$ Messungen zu ermittelnde Zustandsvektor $x$ ist:

$$(GI22) \qquad x = \left[v_{r,x}, v_{r,y}, v_{r,z}, v_{i,1}, v_{i,2}, ..., v_{i,K}\right]^T$$

wobei das erweiterte Gleichungssystem gelöst werden muss:

$$(GI23) \qquad F(v_{r,x}, v_{r,y}, v_{r,z}, v_{i,1}, v_{h,1}, P_{a,1}, ..., v_{i,K}, v_{h,K}, P_{a,K}) = 0$$

$$F = \left[F_{1,1}, F_{2,1}, F_{3,1}, ..., F_{1,K}, F_{2,K}, F_{3,K}\right]^T$$

Wobei $F_{1,k}$, $F_{2,k}$, $F_{3,k}$ Evaluationen des Gleichungssystems (GI21) für die k-te "Messung" der aerodynamischen Leistungen sind. Zur Lösung der Gleichung (GI23) ist eine Jacobimatrix erforderlich. Die Jacobimatrix für die k-te Messung ergibt sich zu:

$$(GI24) \qquad \mathfrak{J}^{(k)} = \begin{bmatrix} J_{11}^{(k)} & J_{12}^{(k)} & J_{13}^{(k)} & J_{14}^{(k)} \\ J_{21}^{(k)} & J_{22}^{(k)} & J_{23}^{(k)} & J_{24}^{(k)} \\ J_{31}^{(k)} & J_{32}^{(k)} & J_{33}^{(k)} & J_{34}^{(k)} \end{bmatrix}$$

mit: $J_{ij}^{(k)} = \partial F_{i,k} / \partial x_{j,k}$. Damit kann nun die erweiterte Jacobi Matrix $\mathfrak{J} \in \mathfrak{R}^{3K \times K+3}$ konstruiert werden. Im beispielhaften Fall von drei Messungen (K = 3) ergibt sich: $x|_{N=3} = [v_{r,x}, v_{r,y}, v_{r,z}, v_{i,1}, v_{i,2}, v_{i,3}]^T$ und

$$\Im|_{N=3} = \begin{bmatrix} J_{11}^{(1)} & J_{12}^{(1)} & J_{13}^{(1)} & J_{14}^{(1)} & 0 & 0 \\ J_{21}^{(1)} & J_{22}^{(1)} & J_{23}^{(1)} & J_{24}^{(1)} & 0 & 0 \\ J_{31}^{(1)} & J_{32}^{(1)} & J_{33}^{(1)} & J_{34}^{(1)} & 0 & 0 \\ J_{11}^{(2)} & J_{12}^{(2)} & J_{13}^{(2)} & 0 & J_{14}^{(2)} & 0 \\ J_{21}^{(2)} & J_{22}^{(2)} & J_{23}^{(2)} & 0 & J_{24}^{(2)} & 0 \\ J_{31}^{(2)} & J_{32}^{(2)} & J_{33}^{(2)} & 0 & J_{34}^{(2)} & 0 \\ J_{11}^{(3)} & J_{12}^{(3)} & J_{13}^{(3)} & 0 & 0 & J_{14}^{(3)} \\ J_{21}^{(3)} & J_{22}^{(3)} & J_{23}^{(3)} & 0 & 0 & J_{24}^{(3)} \\ J_{31}^{(3)} & J_{32}^{(3)} & J_{33}^{(3)} & 0 & 0 & J_{34}^{(3)} \end{bmatrix}.$$

Eine Erweiterung auf K Messungen ist für den Fachmann leicht möglich.

Wenn Messungen von verschiedenen Posen des Multikopters kombiniert werden, müssen die sich jeweils ergebenden Windgeschwindigkeiten in ein gemeinsames Bezugssystem transformiert werden.

Vorteilhaft wird die Freistromgeschwindigkeit für den n-ten Propeller wie folgt definiert:

$$(Gl25) \qquad v_\infty^{(n)} = \begin{bmatrix} v_{\infty,x}^{(n)} \\ v_{\infty,y}^{(n)} \\ v_{\infty,z}^{(n)} \end{bmatrix} = R^{(n)} \begin{bmatrix} v_{\infty,x} \\ v_{\infty,y} \\ v_{\infty,z} \end{bmatrix} + v_0^{(n)}$$

Wobei die transformierten Geschwindigkeiten genutzt werden, um Gleichungen (Gl21) und (Gl24) zu berechnen. Die Offset-Geschwindigkeit $v_0^{(n)}$ kann von einem Posen-Schätzsystem erhalten werden als Unterschiedsgeschwindigkeit zwischen zwei Messungen. Vorteilhaft kann auch die Offsetgeschwindigkeit des Propellers aufgrund einer Winkelgeschwindigkeit des Multikopters verwendet werden, bspw. $v_0^{(n)} = R_{pb}^{(n)} \omega \times r_n$. Die Rotationsmatrix $R^{(n)}$ transformiert die Relativgeschwindigkeit vom gemeinsamen Koordinatensystem in das Propellerkoordinatensystem. Diese Formulierung erlaubt vorteilhaft die unabhängige Bestimmung aller drei Komponenten der Freistromgeschwindigkeit. Es erlaubt weiterhin die Ermittlung der Windkomponenten $v_w$ auch für den Fall, dass die Propeller nicht in einer koplanaren Konfiguration am Multikopter angeordnet sind.

Sofern die Gleichungen "matchen", ist ein multidimensionales Optimierungsproblem zu lösen. Die Lösung liegt dann in dem Schnittpunkt aller nichtlinearen Funktionen, für die gilt: $F = 0$. Im allgemeinen Fall ergibt sich jedoch kein Schnittpunkt für alle nichtlinearen Funktionen. In diesem Fall muss ein nichtlineares quadratisches Minimierungsproblem gelöst werden mit folgender objektiver Funktion:

$$(Gl26) \qquad \bar{f} = \frac{1}{2} F^T F.$$

Dies erfolgt vorteilhafter Weise mit einem Levenberg-Marquard Verfahren. Sofern eine exakte Lösung existiert, gilt $\bar{f} = 0$, d.h. dem Schnittpunkt von $F = 0$. In allen anderen Fällen ergibt sich eine quadratisch minimierte Lösung.

Der Lösungsraum von Gleichung (Gl26) enthält lokale Optima. Basierend auf der zu Grunde liegenden Physik, können dieselben gemessenen aerodynamischen Leistungen $P_a$ bei unterschiedlichen Windgeschwindigkeiten $v_w$ und induzierten Geschwindigkeiten $v_i$ auftreten. Die optimierten Variablen sind Geschwindigkeiten. Es ist deshalb sinnvoll, physikalische Erwägungen zu Grunde zu legen, um sinnvolle Lösungen von Unsinn von Lösungen zu unterscheiden. Ein Multikopter muss Leistung einsetzen um Schub zu erzeugen, was bedeutet $T > 0$ und $P_a > 0$. Die induzierte Geschwindigkeit $v_i$ ist kleiner als die Schwebefluggeschwindigkeit $v_h$. Vorteilhaft wird die induzierte Geschwindigkeit auf einen Bereich $0 < v_i < v_h$ beschränkt.

Eine vorteilhafte Weiterbildung des Multikopters zeichnet sich dadurch aus, dass die zweite Einheit dazu ausgeführt und eingerichtet ist, das folgende oder ein in dieses überführbare oder in seinen Grundgedanken äquivalente nichtlineare quadratische Minimierungsproblem für eine Anzahl von insgesamt K Messungen der aerodynamischen Leistung $P_{a,n}$ für $f$ zu lösen, mit $k = 1, ..., K$ und $K \geq 1$:

$$(1) \quad \overline{f} = \frac{1}{2} F^T F$$

wobei gilt:

$$(2) \quad F(v_{r,x}, v_{r,y}, v_{r,z}, v_{i,1}, v_{h,1}, P_{a,1}, ..., v_{i,K}, v_{h,K}, P_{a,K}) = 0,$$

$$(3) \quad F = \left[F_{1,1}, F_{2,1}, F_{3,1}, ..., F_{1,K}, F_{2,K}, F_{3,K}\right],$$

$$(4) \quad F_{1,k} = v_{i,k}^4 - 2v_{i,k}^3 v_{r,z} + v_{i,k}^2(v_{r,x}^2 + v_{r,y}^2 + v_{r,z}^2) - v_{h,k}^4 = 0$$

$$(5) \quad F_{2,k} = v_{i,k} U_k(v_{i,k} - v_{r,z}) - P_{a,k}/(2\rho A_n) = 0$$

$$(6) \quad F_{3,k} = v_{h,k}^2(v_{i,k} - v_{r,z}) - P_{a,k}/(2\rho A_n) = 0$$

$$(7) \quad U_k = \sqrt{v_{r,x}^2 + v_{r,y}^2 + (v_{i,k} - v_{r,z})^2}$$

mit

$A_n$:          vom n-ten Propeller überstrichene Fläche,
$\rho$:          Luftdichte,
$v_{h,k}(P_{a,n,k})$:     induzierte Geschwindigkeit des n-ten Propellers im Schwebeflug zur $k$-ten Messung,
$v_{i,k}(P_{a,n,k})$:      vom n-ten Propeller induzierte Geschwindigkeit zur k-ten Messung.

Die vorstehenden Gleichungen (1) bis (7) sind im jeweiligen Propeller-Koordinatensystem beschrieben.
Eine vorteilhafte Weiterbildung des Multikopters zeichnet sich dadurch aus, dass die zweite Einheit derart ausgeführt und eingerichtet ist, dass die von der ersten Einheit ermittelten Horizontalkomponenten ($v_{r,x}$, $v_{r,y}$) der Relativgeschwindigkeit $v_r$ in dem nichtlinearen quadratischen Minimierungsproblem durch folgende oder in diese überführbare Zusammenhänge berücksichtigt wird:

$$(9) \quad F_{4,k} = \overline{v}_{r,x,k} - v_{r,x} = 0$$

$$(10) \quad F_{5,k} = \overline{v}_{r,y,k} - v_{r,y} = 0.$$

Die Gleichungen (9) und (10) sind im jeweiligen Propellerkoordinatensystem beschrieben. Deswegen kann die gemäß geltendem Anspruch 1 geschätzte Geschwindigkeit in das Propeller-Koordinatensystem projiziert werden, sodass diese Gleichungen gelten.
Eine vorteilhafte Weiterbildung des Multikopters zeichnet sich dadurch aus, dass dem Modell M1 folgende Bewegungsgleichung zugrunde liegt oder das Modell M1 auf folgende Bewegungsgleichung zurückführbar ist:

$$M\dot{v} + C(v)v + g_M = J^T\tau + \tau_e$$

wobei gilt: $\tau_e = \tau_d(v_r)$ und $v_r = r_B - v_w$

$M$:     generalisierte Masse des Multikopters

$v$: generalisierte Geschwindigkeit $[v_B^T, \tilde{\omega}]$

$\omega$: Winkelgeschwindigkeit des Multikopters

$\dot{v}$: Zeitableitung von $v$

$$C(v) := \begin{bmatrix} 0_{3x3} & 0_{3x3} \\ 0_{3x3} & -(I\omega) \times \end{bmatrix}$$

$g_M$: Gewicht des Multikopters

$J$: Blockdiagonale der Jakobimatrix

$\tau$: von den Elektromotoren $MOT_n$ zu erzeugender Soll-Kraftwinder $[f^T, \overline{m^T}]$

$\tau_e$: auf den Multikopter von extern einwirkender Kraftwinder $[f_e^T, \overline{m}_e^T]$

$\tau_d(v_r)$: ausschließlich durch Luftreibung erzeugter externer Kraftwinder

$v_r$: $= (v_{r,x}, v_{r,y}, v_{r,z})^T$ Relativgeschwindigkeit des Multikopters zur Luft

$v_w$: $= (v_{w,x}, v_{w,y}, v_{w,z})^T$ Windgeschwindigkeit.

Eine vorteilhafte Weiterbildung des Multikopters zeichnet sich dadurch aus, dass ein Steuerungssystem zur Steuerung und Regelung der Elektromotoren $MOT_n$ vorhanden ist, wobei das Steuerungssystem derart ausgeführt und eingerichtet ist, dass die Elektromotoren $MOT_n$ derart geregelt werden, dass die Projektion der ermittelten Windgeschwindigkeit $v_w$ auf die Richtung von Drehachsen der Propeller $PROP_n$ maximiert wird.

Das zugrundeliegende Optimierungsproblem kann auch mathematisch formuliert werden. Hierbei muss eine Orientierung o* ermittelt, die die Konditionszahl der Jakobi-Matrix minimiert, indem o* = argmin K(J), wobei K die Konditionszahl ist.

Hierzu kann vorteilhaft insbesondere eine Trajektorienplanung verwendet werden und/oder die Ansteuerung des Multikopters zur optimalen Windschätzung adaptiert werden. Die Lösung kann auch durch Gradientenverfahren, potentialbasierte Methoden oder andere äquivalente mathematische Lösungen erzeugt werden.

Durch diese Maßnahme wird die Genauigkeit der Windmessung erhöht und die Robustheit der Messung verbessert.

Vorteilhaft sind im Multikopter zur Ermittlung der ersten Parameter P1 ein 3D-Beschleunigungssensor und ein Gyroskop sowie ein Positionsermittlungssystem vorhanden und mit der ersten Schnittstelle verbunden. Vorteilhaft ist das Positionsermittlungssystem ein Satellitennavigationssystem und/oder ein optisches Navigationssystem.

Eine vorteilhafte Weiterbildung des Multikopters zeichnet sich dadurch aus, dass zur Ermittlung der aerodynamischen Leistung $P_{a,n}$ je Elektromotor $MOT_n$ ein Motorstromsensor, ein Motordrehzahlsensor oder ein Motordrehzahlschätzer sowie eine Einheit vorhanden ist, die auf Basis eines vorgegebenen Modells M2 zur Beschreibung der Propellerdynamik, der erfassten Motorenströme und - drehzahlen die aerodynamische Leistung $P_{a,n}$ ermittelt. Zumindest ein entsprechendes Modell M2 wurde vorstehend bereits erläutert.

Ein weiterer Aspekt der vorliegenden Erfindung betrifft ein Verfahren zur Messung einer Windgeschwindigkeit $v_w$ mit einem Multikopter, wobei der Mutilkopter eine Anzahl $N$ Elektromotoren $MOT_n$ zum Antrieb von $N$ Propellern $PROP_n$ aufweist, mit $n = 1,2, ..., N$ und $N \geq 2$, mit folgenden Schritten.

In einem Schritt erfolgt ein Bereitstellen von ersten zeitabhängigen Parametern P1 umfassend, eine 3D-Position $r_B = (x_b, y_b, z_b)$ des Schwerpunktes B des Multikopters (oder Bereitstellen von Informationen aus denen die Position $r_B = (x_b, y_b, z_b)$ des Schwerpunktes B des Multikopters ermittelbar / schätzbar ist), die Zeitableitungen: $\dot{r}_B$ und $\ddot{r}_B$, eine 3D-Orientierung $o_M = (\alpha_M, \beta_M, \gamma_M)$ des Multikopters sowie die Zeitableitung $\dot{o}_M$ (die Größen $r_B$, $\dot{r}_B$, $o_M = (\alpha_M, \beta_M, \gamma_M)$, $\dot{o}_M$ werden vorteilhaft gemessen (bspw. mittels GPS, LIDAR, Kameras, etc. einen oder mehreren inertialen Messeinheiten (IMU)) etc., beobachtet oder abgeleitet werden (bspw. durch visuelle Odometrie, Sensordatenfusion wie Kalman-Filter etc. )). In einem weiteren Schritt erfolgt ein Bereitstellen einer von den Propellern $PROP_n$ jeweils erzeugten aerodynamischen Leistung $P_{a,n}$ (die vorteilhaft gemessen oder beobachtet wird). In einem weiteren Schritt erfolgt auf Basis der ersten Parameter P1 und eines bereitgestellten Modells M1 zur Beschreibung einer Dynamik des Multikopters und einer auf Basis des Modells M1 ermittelten Schätzung eines oder mehrerer auf den Multikopter extern einwirkenden Kraftwinder $\tau_e$ ein Ermitteln von Horizontalkomponenten $(v_{r,x}, v_{r,y})$ einer Relativgeschwindigkeit $v_r$ des Multikopters zur Luft (hierzu werden vorteilhaft Funktionsapproximatoren, die aus dem Bereich "maschinelles Lernen" bekannt sind verwendet, wie z.B. lineare Regression, neuronale Netze, mehrschichtige Perzeptronen, Tiefe Neuronale Netze, Konvolutionsnetze, Rekurrente Netze wie beispielsweise LSTM-Netze, Support Vector Maschinen (SVM) etc.). In einem weiteren Schritt erfolgt auf Basis der ermittelten Horizontalkomponenten $(v_{r,x}, v_{r,y})$, der aerodynamischen Leistung $P_{a,n}$ ein Ermitteln der Vertikalkomponente $(v_{r,z})$ der Relativgeschwindigkeit $v_r$. In einem weiteren Schritt erfolgt auf Basis der ermittelten Relativgeschwindigkeit $v_r = (v_{r,x}, v_{r,y}, v_{r,z})$ sowie auf Basis der Parameter P1 ein Ermitteln der Windgeschwindigkeit $v_w$ in einem Inertialsystem. Schließlich erfolgt ein Speichern der für $r_B$ ermittelten Windgeschwindigkeit: $v_w(r_B) = (v_{w,x}(r_B), v_{w,y}(r_B)\text{-}v_{w,z}(r_B))$ und/oder Übertragen der Windgeschwindigkeit: $v_w(r_B) = (v_{w,x}(r_B), v_{w,y}(r_B), v_{w,z}(r_B))$ an einen Empfänger.

Die Horizontalkomponenten $(v_{r,x}, v_{r,y})$ werden somit durch Messung des extern auf den Multikopter einwirkenden Kraftwinders unter Nutzung der Gleichungen (GI16) und (GI17) ermittelt. Basierend auf den ermittelten Horizontalkomponenten $(v_{r,x}, v_{r,y})$ und einer ermittelten aerodynamischen Leistung $P_a$ wird die Vertikalkomponente $(v_{r,z})$ ermittelt. Durch den Zusammenhang $v_r = r_B\text{-}v_w$ kann schließlich die dreidimensionale Windgeschwindigkeit ermittelt, gespeichert, übertragen und ggf. anschließend ausgegeben werden.

Eine vorteilhafte Weiterbildung des vorgeschlagenen Verfahrens zeichnet sich dadurch aus, dass das folgende oder ein in dieses überführbare nichtlineare quadratische Minimierungsproblem für eine Anzahl von insgesamt K Messungen der aerodynamischen Leistung $P_{a,n}$ für $f$ gelöst wird, mit $k = 1,2, ..., K$ und $K \geq 1$:

$$(1) \quad \overline{f} = \frac{1}{2}F^T F$$

wobei gilt:

$$(2) \quad F(v_{r,x}, v_{r,y}, v_{r,z}, v_{i,1}, v_{h,1}, P_{a,1}, ..., v_{i,K}, v_{h,K}, P_{a,K}) = 0,$$

$$(3) \quad F = \left[F_{1,1}, F_{2,1}, F_{3,1}, ..., F_{1,K}, F_{2,K}, F_{3,K}\right],$$

$$(4) \quad F_{1,k} = v_{i,k}^4 - 2v_{i,k}^3 v_{r,z} + v_{i,k}^2(v_{r,x}^2 + v_{r,y}^2 + v_{r,z}^2) - v_{h,k}^4 = 0$$

$$(5) \quad F_{2,k} = v_{i,k}U_k(v_{i,k} - v_{r,z}) - P_{a,k}/(2\rho A_n) = 0$$

$$(6) \quad F_{3,k} = v_{h,k}^2(v_{i,k} - v_{r,z}) - P_{a,k}/(2\rho A_n) = 0$$

$$(7) \quad U_k = \sqrt{v_{r,x}^2 + v_{r,y}^2 + (v_{i,k} - v_{r,z})^2}$$

mit

$A_n$:  vom n-ten Propeller überstrichene Fläche,
$\rho$:  Luftdichte
$v_{h,k}(P_{a,n,k})$:  induzierte Geschwindigkeit des n-ten Propellers im Schwebeflug zur k-ten Messung,
$v_{i,k}(P_{a,n,k})$:  vom $n$-ten Propeller induzierte Geschwindigkeit zur k-ten Messung.

Die vorstehenden Gleichungen (1) bis (7) sind im jeweiligen Propeller-Koordinatensystem beschrieben.
Eine vorteilhafte Weiterbildung des vorgeschlagenen Verfahrens zeichnet sich dadurch aus, dass die ermittelten Horizontalkomponenten $(v_{r,x}, v_{r,y})$ in dem nichtlinearen quadratischen Minimierungsproblem durch folgende oder in diese überführbare Zusammenhänge berücksichtigt werden:

$$(9) \quad F_{4,k} = v_{r,x,k} - v_{r,x} = 0$$

$$(10) \quad F_{5,k} = v_{r,y,k} - v_{r,y} = 0.$$

Die Gleichungen (9) und (10) sind im jeweiligen Propellerkoordinatensystem beschrieben. Deswegen kann die gemäß geltendem Anspruch 1 geschätzte Geschwindigkeit in das Propeller-Koordinatensystem projiziert werden, sodass diese Gleichungen gelten.
Eine vorteilhafte Weiterbildung des vorgeschlagenen Verfahrens zeichnet sich dadurch aus, dass dem Modell M1 folgende Bewegungsgleichung zugrunde liegt oder das Modell M1 auf folgende Bewegungsgleichung zurückführbar

ist:

$$M\dot{v} + C(v)v + g_M = J^T\tau + \tau_e$$

wobei gilt: $\tau_e = \tau_d(v_r)$ und $v_r = r_B - v_w$

M: generalisiert Masse des Multikopters

v: generalisierte Geschwindigkeit $[\dot{r}_b^T, \omega^T]$

$\omega$: Winkelgeschwindigkeit des Multikopters

$\dot{v}$: Zeitableitung von $v$

$$C(v): = \begin{bmatrix} 0_{3x3} & 0_{3x3} \\ 0_{3x3} & -(I\omega)\times \end{bmatrix}$$

$g_M$: Gewicht des Multikopters

$J$: Blockdiagonale Jakobimatrix

$\tau$: von den Elektromotoren $MOT_n$ zu erzeugender Soll-Kraftwinder $[f^T, \overline{m}^T]$

$\tau_e$: auf den Multikopter von extern einwirkender Kraftwinder $[f_e^T, \overline{m}_e^T]$

$\tau_d(v_r)$: ausschließlich durch Luftreibung erzeugter externer Kraftwinder

$v_r$: $= (v_{r,x}, v_{r,y}, v_{r,z})^T$ Relativgeschwindigkeit des Multikopters zur Luft

$v_w$: $= (v_{w,x}, v_{x,y}, v_{w,z})^T$ Windgeschwindigkeit.

Eine vorteilhafte Weite des vorgeschlagenen Verfahrens zeichnet sich dadurch aus, dass ein Steuerungssystem zur Steuerung und Regelung der Elektromotoren $MOT_n$ vorhanden ist, wobei die Elektromotoren $MOT_n$ derart geregelt werden, dass die Projektion der Windgeschwindigkeit $v_w$ auf die Richtung der Drehachsen der Propeller maximiert wird.

Eine vorteilhafte Weiterbildung des vorgeschlagenen Verfahrens zeichnet sich dadurch aus, dass zur Ermittlung der aerodynamischen Leistung $P_{a,n}$ je Elektromotor $MOT_n$ ein Motorstrom und eine Motordrehzahl ermittelt wird, und auf Basis eines vorgegebenen Modells M2 zur Beschreibung der Propellerdynamik, der erfassten Motorenströme und drehzahlen die aerodynamische Leistung $P_{a,n}$ ermittelt wird.

Eine vorteilhafte Weiterbildung des vorgeschlagenen Verfahrens zeichnet sich dadurch aus, dass die Ermittlung der Horizontalkomponenten $(v_{r,x}, v_{r,y})$ mittels eines Modells des aerodynamischen Kraftwinders, der die Abhängigkeit $v_r(\tau_e)$ beschreibt, erfolgt.

Eine vorteilhafte Weiterbildung des vorgeschlagenen Verfahrens zeichnet sich dadurch aus, dass das nichtlineare quadratische Minimierungsproblem mittels eines nichtlinearen Optimierungsverfahrens (z.B. Levenberg-Marquardt) gelöst wird.

Ein weiterer Aspekt der Erfindung betrifft ein System umfassend zwei oder mehr Multikopter, wie vorstehend beschrieben, wobei die Multikopter jeweils zum auch bilateralen Datenaustausch untereinander in einem Datennetzwerk ausgeführt und eingerichtet sind und die Multikopter die jeweils ermittelte Windgeschwindigkeit: $v_w(r_B) = (v_{w,x}(r_B), v_{w,y}(r_B), v_{w,z}(r_B))$ an die jeweils anderen Multikopter übermitteln. Der Datenaustausch erfolgt vorzugsweise per Funk und/oder optischer Datenübermittlung.

Vorteilhaft sind die Multikopter als Agenten oder Softbots zur drahtlosen Kommunikation im Datennetz ausgeführt. Der Begriff "Agent" wird vorliegend in der Bedeutung: "Computersystem, das sich in einer bestimmten Umgebung befindet und fähig ist, eigenständige Aktionen in dieser Umgebung durchzuführen, um seine (vorgegebenen) Ziele zu erreichen", verwendet.

Eine vorteilhafte Weiterbildung des vorgeschlagenen Systems zeichnet sich dadurch aus, dass das Steuerungssystem zur Steuerung und Regelung der Elektromotoren $MOT_n$ des jeweiligen Multikopters derart ausgeführt und eingerichtet ist, dass von den anderen Multikoptern übertragene ermittelte Windgeschwindigkeiten: $v_w(r_B) = (v_{w,x}(r_B), v_{x,y}(r_B), v_{w,z}(r_B))$ bei der Regelung und Bewegungsplanung berücksichtigt werden.

Eine vorteilhafte Weiterbildung des vorgeschlagenen Systems zeichnet sich dadurch aus, dass die Multikopter die Positionen $r_B$ des Schwerpunktes B und/oder die Zeitableitungen: $\dot{r}_B$ und/oder $\ddot{r}_B$ und/oder die 3D-Orientierung $o_M$ und/oder deren Zeitableitung $\dot{o}_M$ des jeweiligen Multikopter und/oder die auf den jeweiligen Multikopter extern einwirkenden Kraftwinder $\tau_e$ und/oder die aerodynamischen Leistung $P_{a,n}$ an die jeweils anderen Multikopter übermitteln.

Weitere Vorteile, Merkmale und Einzelheiten ergeben sich aus der nachfolgenden Beschreibung, in der - gegebenenfalls unter Bezug auf die Zeichnungen - zumindest ein Ausführungsbeispiel im Einzelnen beschrieben ist. Gleiche, ähnliche und/oder funktionsgleiche Teile sind mit gleichen Bezugszeichen versehen.

Es zeigen:

Fig. 1 ein Diagramm zur Darstellung der zur Beschreibung der Dynamik des Multikopters benutzten Größen,

Fig. 2 eine schematische Darstellung des Aufbaus eines erfindungsgemäßen Multikopters, und

Fig. 3. eine schematische Darstellung eines Ablaufplans eines erfindungsgemäßen Verfahrens.

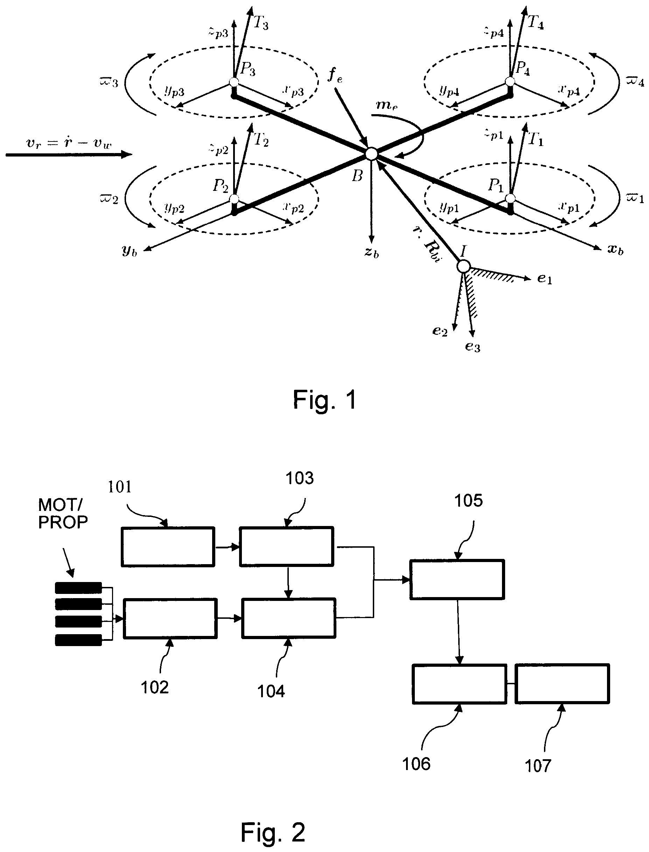

Fig. 1 zeigt ein Diagramm zur Darstellung der zur Beschreibung der Dynamik des Multikopters benutzten Größen und Bezugssysteme. Das Bezugssystem B des Multikopters liegt an der Position r mit einer Orientierung $\overline{R}$ im Inertialsystem I und ist der Windgeschwindigkeit $v_w$ ausgesetzt. Dieser Wind erzeugt durch aerodynamische Kräfte abhängig von der relativen Geschwindigkeit $v_r$ des Multikopters gegenüber der Luft einen externen Kraftwinder

$$\tau_e = \left[ f_e^T, \overline{m}_e^T \right]^T$$

. Die Propeller rotieren mit einer Winkelgeschwindigkeit $\overline{\omega} = [\overline{\omega}_1, \overline{\omega}_2, \overline{\omega}_3, \overline{\omega}_4]^T$ und erzeugen einen Soll-Kraftwinder $\tau = [f^T, \overline{m}^T]^T$ durch die Schübe $T_i$ und Reibungsmomente $Q_i$. Die sonstigen zunehmenden Angaben sind in Zusammenhang mit der vorstehenden Beschreibung selbsterklärend.

Fig. 2 zeigt eine schematische Darstellung des Aufbaus eines erfindungsgemäßen Multikopters. Der Multikopter umfasst vorliegend eine Anzahl N = 4 Elektromotoren $MOT_n$ zum Antrieb von N = 4 Propellern $PROP_n$, eine erste Schnittstelle 101 zur Bereitstellung von ersten Parametern P1 umfassend: eine 3D-Position $r_B = (x_b, y_b, z_b)$ des Schwerpunktes B des Multikopters, die Zeitableitungen: $r_B$ und $r_B$, eine 3D-Orientierung $o_M = (\alpha_M, \beta_M, \gamma_M)$ des Multikopters sowie deren Zeitableitung $o_M$, eine zweite Schnittstelle 102 zur Bereitstellung einer von den Propellern $PROP_n$ jeweils aktuell erzeugten aerodynamischen Leistung $P_{a,n}$ und eine erste Einheit 103, die auf Basis der ersten Parameter P1, auf Basis eines bereitgestellten Modells M1 zur Beschreibung einer Dynamik des Multikopters, und einer auf Basis des Modells M1 ermittelten Schätzung eines auf den Multikopter extern einwirkenden Kraftwinders $\tau_e$ Horizontalkomponenten $(v_{r,x}, v_{r,y})$ einer Relativgeschwindigkeit $v_r := (v_{r,x}, v_{r,y}, v_{r,z})^T$ des Multikopters zur Luft ermittelt.

Der Multikopter umfasst weiterhin eine zweite Einheit 104, die auf Basis der ermittelten Horizontalkomponenten $(v_{r,x}, v_{r,y})$ sowie auf Basis der aerodynamischen Leistung $P_{a,n}$ die Vertikalkomponente $(v_{r,z})$ der Relativgeschwindigkeit $v_r$ ermittelt, eine dritte Einheit 105, die auf Basis der ermittelten Horizontalkomponenten $(v_{r,x}, v_{r,y})$, der Vertikalkomponente $(v_{r,z})$ sowie auf Basis der Parameter P1 die Windgeschwindigkeit $v_w$ in einem Inertialsystem ermittelt, eine Speichereinheit 106 zur Speicherung der für die Orte $r_B$ ermittelten Windgeschwindigkeiten $v_w(r_B) = (v_{w,x}(r_B), v_{w,y}(r_B), v_{w,z}(r_B))$ und eine Übertragungseinheit 107 zur drahtlosen Übertragung der Windgeschwindigkeit $v_w(r_B)$ an einen Empfänger (nicht dargestellt).

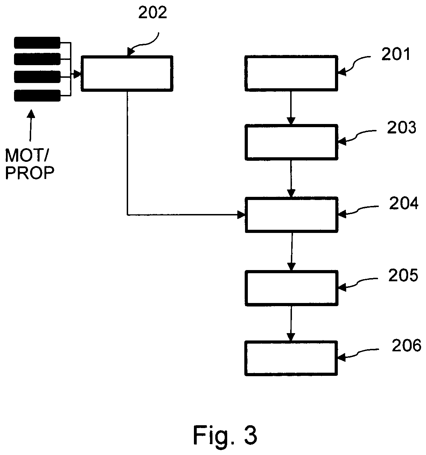

Fig. 3 zeigt eine schematische Darstellung eines Ablaufplans eines erfindungsgemäßen Verfahrens zur Messung einer Windgeschwindigkeit $v_w$ mit einem Multikopter, wobei der Mutilkopter eine Anzahl N Elektromotoren $MOT_n$ zum Antrieb von N Propellern $PROP_n$ aufweist, mit $n = 1,2,...N$ und $N \geq 2$. Das Verfahren umfasst folgende Schritte. In einem Schritt 201 erfolgt ein Bereitstellen von ersten zeitabhängigen Parametern P1 umfassend, eine 3D-Position $r_B = (x_b, y_b, z_b)$ des Schwerpunktes B des Multikopters, die Zeitableitungen: $r_B$ und $r_B$, eine 3D-Orientierung $o_M = (\alpha_M, \beta_m, \gamma_M)$ des Multikopters sowie die Zeitableitung $o_M$. In einem weiteren Schritt 202 erfolgt ein Bereitstellen einer von den Propellern $PROP_n$ jeweils erzeugten aerodynamischen Leistung $P_{a,n}$. In einem weiteren Schritt 203 erfolgt auf Basis der ersten Parameter P1, eines bereitgestellten Modells M1 zur Beschreibung einer Dynamik des Multikopters und einer auf Basis des Modells M1 ermittelten Schätzung eines auf den Multikopter extern einwirkenden Kraftwinders $\tau_e$ ein Ermitteln von Horizontalkomponenten $(v_{r,x}, v_{r,y})$ einer Relativgeschwindigkeit $v_r$ des Multikopters zur Luft. In einem weiteren Schritt 204 erfolgt auf Basis der ermittelten Horizontalkomponenten $(v_{r,x}, v_{r,y})$, der aerodynamischen Leistung $P_{a,n}$ ein Ermitteln der Vertikalkomponente $(v_{r,z})$ der Relativgeschwindigkeit $v_r$, auf Basis der ermittelten Relativgeschwindigkeit $v_r = (v_{r,x}, v_{r,y}, v_{r,z})$ sowie auf Basis der Parameter P1 Ermitteln der Windgeschwindigkeit $v_w$ in einem Inertialsystem. In einem weiteren Schritt 205 erfolgt ein Speichern der für $r_B$ ermittelten Windgeschwindigkeit:

$v_w(r_B) = (v_{w,x}(r_B), v_{w,y}(r_B), v_{w,z}(r_B))$. In einem weiteren Schritt **206** erfolgt ein Übertragen der Windgeschwindigkeit: $v_w(r_B) = (v_{w,x}(r_B), v_{w,y}(r_B), v_{w,z}(r_B))$ an einen Empfänger.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche und deren rechtliche Entsprechungen, wie etwa weitergehenden Erläuterungen in der Beschreibung, definiert wird.

Bezugszeichenliste

| | |
|---|---|
| 101 | erste Schnittstelle |
| 102 | zweite Schnittstelle |
| 103 | erste Einheit |
| 104 | zweite Einheit |
| 105 | dritte Einheit |
| 106 | Speichereinheit |
| 107 | Übertragungseinheit |
| 201-206 | Verfahrensschritte |

**Patentansprüche**

1.  Multikopter aufweisend:

    - eine Anzahl $N$ Elektromotoren $MOT_n$ zum Antrieb von $N$ Propellern $PROP_n$, mit n = $1,2,...N$ und $N \geq 2$,
    - eine erste Schnittstelle (101) zur Bereitstellung von ersten Parametern P1 umfassend: eine 3D-Position $r_B = (x_B, y_B, z_B)$ des Schwerpunktes B des Multikopters, die Zeitableitungen: $\dot{r}_B$ *und* $\ddot{r}_B$, eine 3D-Orientierung $o_M = (\alpha_M, \beta_M, \gamma_M)$ des Multikopters sowie deren Zeitableitung $\dot{o}_M$,
    - eine zweite Schnittstelle (102) zur Bereitstellung einer von den Propellern $PROP_n$ jeweils aktuell erzeugten aerodynamischen Leistung $P_{a,n}$,
    - eine erste Einheit (103), die so ausgebildet ist, dass sie auf Basis der ersten Parameter P1 und auf Basis eines bereitgestellten Modells M1 zur Beschreibung einer Dynamik des Multikopters, und einer auf Basis des Modells M1 ermittelten Schätzung eines auf den Multikopter extern einwirkenden Kraftwinders $\tau_e$ Horizontalkomponenten $(v_{r,x}, v_{r,y})$ einer Relativgeschwindigkeit $v_r := (v_{r,x}, v_{r,y}, v_{r,z})^T$ des Multikopters zur Luft ermittelt,
    - eine zweite Einheit (104), die so ausgebildet ist, dass sie auf Basis der ermittelten Horizontalkomponenter $(v_{r,x}, v_{r,y})$ sowie auf Basis der aerodynamischen Leistung $P_{a,n}$ die Vertikalkomponente $(v_{r,z})$ der Relativgeschwindigkeit $v_r$ ermittelt,
    - eine dritte Einheit (105), die so ausgebildet ist, dass sie auf Basis der ermittelten Horizontalkomponenter $(v_{r,x}, v_{r,y})$, der Vertikalkomponente $(v_{r,z})$ sowie auf Basis der Parameter P1 die Windgeschwindigkeit $v_w$ in einem Inertialsystem ermittelt,
    - eine Speichereinheit (106) zur Speicherung der für die Orte $r_B$ ermittelten Windgeschwindigkeiten $v_w(r_B) = (v_{w,x}(r_B), v_{w,y}(r_B), v_{w,z}(r_B))$ und/oder eine Übertragungseinheit (107) zur drahtlosen Übertragung der Windgeschwindigkeit $v_w(r_B)$ an einen Empfänger.

2.  Multikopter nach Anspruch 1,
    bei dem die zweite Einheit (104) dazu ausgeführt und eingerichtet ist, für einen Propeller das folgende nichtlineare quadratische Minimierungsproblem für eine Anzahl von insgesamt K Messungen der aerodynamischen Leistung $P_{a,n}$ für $f$ zu lösen, mit $k = 1, ... K$ und $K \geq 1$:

$$f = \frac{1}{2} F^T F$$

(1)

wobei gilt:

(2) $$F(v_{r,x}, v_{r,y}, v_{r,z}, v_{i,1}, v_{h,1}, P_{a,1}, ..., v_{i,K}, v_{h,K}, P_{a,K}) = 0$$

$$(3) \qquad F = [F_{1,1}, F_{2,1}, F_{3,1}, \ldots, F_{1,K}, F_{2,K}, F_{3,K}]$$

$$(4) \qquad F_{1,k} = v_{i,k}^4 - 2v_{i,k}^3 v_{r,z} + v_{i,k}^2 (v_{r,x}^2 + v_{r,y}^2 + v_{r,z}^2) - v_{h,k}^4 = 0$$

$$(5) \qquad F_{2,k} = v_{i,k} U_k (v_{i,k} - v_{r,z}) - P_{a,k}/(2\rho A_n) = 0$$

$$(6) \qquad F_{3,k} = v_{h,k}^2 (v_{i,k} - v_{r,z}) - P_{a,k}/(2\rho A_n) = 0$$

$$(7) \qquad U_k = \sqrt{v_{r,x}^2 + v_{r,y}^2 + (v_{i,k} - v_{r,z})^2}$$

mit

$A_n$: vom $n$-ten Propeller überstrichene Fläche,

$\rho$ : Luftdichte

$v_{h,k}(P_{a,n,k})$ : induzierte Geschwindigkeit des $n$-ten Propellers im Schwebeflug zur $k$-ten Messung,

$v_{i,k}(P_{a,n,k})$ : vom $n$-ten Propeller induzierte Geschwindigkeit zur $k$-ten Messung.

3. Multikopter nach Anspruch 2,
wobei die zweite Einheit (104) derart ausgeführt und eingerichtet ist, dass eine ermittelte Horizontalkomponente $(v_{r,x}, v_{r,y})$ der Relativgeschwindigkeit $v_r$ in dem nichtlinearen quadratischen Minimierungsproblem durch folgende Zusammenhänge berücksichtigt wird:

$$(9) \qquad F_{4,k} = v_{r,x,k} - v_{r,x} = 0$$

$$(10) \qquad F_{5,k} = v_{r,y,k} - v_{r,y} = 0 \,.$$

4. Multikopter nach einem der Ansprüche 2 bis 3,
bei dem in der ersten Einheit (103) dem Modell M1 folgende Bewegungsgleichung zugrunde liegt oder das Modell M1 auf folgende Bewegungsgleichung zurückführbar ist:

$$(11) \qquad M\dot{v} + C(v)v + g_M = J^T \tau + \tau_e$$

wobei gilt: $\tau_e = \tau_d(v_r)$ und $v_r = r_B - v_w$

$M$: generalisierte Masse des Multikopters

$v$: generalisierte Geschwindigkeit $[r_b^T, \omega^T]$

$\omega$: Winkelgeschwindigkeit des Multikopters

$\dot{v}$ : Zeitableitung von $v$

$$C(v)_{\,:} \quad \begin{bmatrix} 0_{3x3} & 0_{3x3} \\ 0_{3x3} & -(I\omega)\times \end{bmatrix}$$

$g_M$: Gewicht des Multikopters

$J$ : Blockdiagonale der Jakobimatrix

$\tau$ : von den Elektromotoren $MOT_n$ zu erzeugender Soll-Kraftwinder $[f^T, m^T]$

$\tau_e$ : auf den Multikopter von extern einwirkender Kraftwinder $[f_e^T, m_e^T]$

$\tau_d(v_r)$ : ausschließlich durch Luftreibung erzeugter externer Kraftwinder

$v_r := (v_{r,x}, v_{r,y}, v_{r,z})^T$ Relativgeschwindigkeit des Multikopters zur Luft

$v_w := (v_{w,x}, v_{w,y}, v_{w,z})^T$ Windgeschwindigkeit.

**5.** Multikopter nach einem der Ansprüche 1 bis 4, bei dem ein Steuerungssystem zur Steuerung und Regelung der Elektromotoren $MOT_n$ vorhanden ist, wobei das Steuerungssystem derart ausgeführt und eingerichtet ist, dass die Elektromotoren $MOT_n$ derart geregelt werden, dass die Projektion der Windgeschwindigkeit $v_w$ auf die Richtung von Drehachsen der Propeller $PROP_n$ maximiert wird.

**6.** Multikopter nach einem der Ansprüche 1 bis 5, bei dem zur Ermittlung der aerodynamischen Leistung $P_{a,n}$ je Elektromotor $MOT_n$ ein Motorstromsensor, ein Motordrehzahlsensor oder ein Motordrehzahlschätzer sowie eine Einheit vorhanden ist, die auf Basis eines vorgegebenen Modells M2 zur Beschreibung der Propellerdynamik, der erfassten Motorenströme und -drehzahlen die aerodynamische Leistung $P_{a,n}$ ermittelt.

**7.** Verfahren zur Messung einer Windgeschwindigkeit $v_w$ mit einem Multikopter, wobei der Multikopter eine Anzahl N Elektromotoren $MOT_n$ zum Antrieb von $N$ Propellern $PROP_n$ aufweist, mit $n = 1,2, ... N$ und $N \geq 2$, mit folgenden Schritten:

- Bereitstellen (201) von ersten zeitabhängigen Parametern P1 umfassend, eine 3D-Position $r_B = (x_B, y_B, z_B)$ des Schwerpunktes B des Multikopters, die Zeitableitungen: $\dot{r}_B$ und $\ddot{r}_B$, eine 3D-Orientierung $o_M = (\alpha_M, \beta_M, \gamma_M)$ des Multikopters sowie die Zeitableitung $\dot{o}_M$,
- Bereitstellen (202) einer von den Propellern $PROP_n$ jeweils erzeugten aerodynamischen Leistung $P_{a,n}$,
- auf Basis der ersten Parameter P1 und eines bereitgestellten Modells M1 zur Beschreibung einer Dynamik des Multikopters und einer auf Basis des Modells M1 ermittelten Schätzung eines auf den Multikopter extern einwirkenden Kraftwinders $\tau_e$ Ermitteln (203) von Horizontalkomponenten $(v_{r,x}, v_{r,y})$ einer Relativgeschwindigkeit $v_r$ des Multikopters zur Luft,
- auf Basis der ermittelten Horizontalkomponenten $(v_{r,x}, v_{r,y})$, der aerodynamischen Leistung $P_{a,n}$ Ermitteln (204) der Vertikalkomponente $(v_{r,z})$ der Relativgeschwindigkeit $v_r$, auf Basis der ermittelten Relativgeschwindigkeit $v_r := (v_{r,x}, v_{r,y}, v_{r,z})^T$ sowie auf Basis der Parameter P1 Ermitteln der Windgeschwindigkeit $v_w$ in einem Inertialsystem, und
- Speichern (205) der für $r_B$ ermittelten Windgeschwindigkeit: $v_w(r_B) := (v_{w,x}(r_B), v_{w,y}(r_B), v_{w,z}(r_B))$ und/oder Übertragen (206) der Windgeschwindigkeit: $v_w(r_B) = (v_{w,x}(r_B), v_{w,y}(r_B), v_{w,z}(r_B))$ an einen Empfänger.

**8.** Verfahren nach Anspruch 7, bei dem ein Steuerungssystem zur Steuerung und Regelung der Elektromotoren $MOT_n$ vorhanden ist, wobei die Elektromotoren $MOT_n$ derart geregelt werden, dass die Projektion der Windgeschwindigkeit $v_w$ auf die Richtung der Drehachsen der Propeller maximiert wird.

**9.** Verfahren nach einem der Ansprüche 7 bis 8, bei dem zur Ermittlung der aerodynamischen Leistung $P_{a,n}$ je Elektromotor $MOT_n$ ein Motorstrom und eine Motordrehzahl ermittelt wird, und auf Basis eines vorgegebenen Modells M2 zur Beschreibung der Propellerdynamik, der erfassten Motorenströme und -drehzahlen die aerodynamische Leistung $P_{a,n}$ ermittelt wird.

**10.** System umfassend zwei oder mehr Multikopter gemäß einem der Ansprüche 1 bis 6, wobei die Multikopter jeweils zum Datenaustausch untereinander in einem Datennetzwerk ausgeführt und eingerichtet sind und die Multikopter die jeweils ermittelte Windgeschwindigkeit: $v_w(r_B) = (v_{w,x}(r_B), v_{w,y}(r_B), v_{w,z}(r_B))$ an die jeweils anderen Multikopter übermitteln.

**11.** System nach Anspruch 10, wobei die Multikopter als Agenten oder Softbots zur drahtlosen Kommunikation im Datennetz ausgeführt sind.

**12.** System nach einem der Ansprüche 10 bis 11, bei dem das Steuerungssystem zur Steuerung und Regelung der Elektromotoren $MOT_n$ des jeweiligen Multikopters derart ausgeführt und eingerichtet ist, dass von den anderen Multikoptern übertragene ermittelte Windgeschwindigkeiten:

$v_w(r_B) = (v_{w,x}(r_B), v_{w,y}(r_B), v_{w,z}(r_B))$ bei der Regelung berücksichtigt werden.

**13.** System nach einem der Ansprüche 10 bis 12,

wobei die Multikopter so eingerichtet sind, dass sie die Positionen $r_B$ *des* Schwerpunktes B und/oder die Zeitableitungen: $\dot{r}_B$ und/oder $\ddot{r}_B$ und/oder die 3D-Orientierung $o_M$ und/oder deren Zeitableitung $\dot{o}_M$ des jeweiligen Multikopter und/oder die auf den jeweiligen Multikopter extern einwirkenden Kraftwinder $\tau_e$ und/oder die aerodynamischen Leistung $P_{a,n}$ an die jeweils anderen Multikopter übermitteln.

## Claims

**1.** Multicopter having:

- a number N of electric motors $MOT_n$ for driving N propellers $PROP_n$, where n = *1, 2, ... N* and $N \geq 2$,
- a first interface (101) for providing first parameters P1 comprising: a 3D position $r_B = (X_B, y_B, z_B)$ of the centre of gravity B of the multicopter, the time derivatives: $\dot{r}_B$ and $\ddot{r}_B$ a 3D orientation $o_M = (\alpha_M, \beta_M, \gamma_M)$ of the multicopter and its time derivative $\dot{o}_M$,
- a second interface (102) for providing an aerodynamic performance $P_{a,n}$ currently generated by each of the propellers $PROP_n$,
- a first unit (103) which is designed such that it determines horizontal components $(v_{r,x}, v_{r,y})$ of a relative velocity $v_r := (v_{r,x}, v_{r,y}, v_{r,z})^T$ of the multicopter to the air on the basis of the first parameters P1 and on the basis of a model M1 supplied for describing a dynamics of the multicopter as well as an estimate of a force screw $\tau_e$ acting externally on the multicopter which is determined on the basis of the model M1,
- a second unit (104) which is designed such that it determines the vertical component $(v_{r,z})$ of the relative velocity $v_r$ on the basis of the determined horizontal components $(v_{r,x}, v_{r,y})$ and on the basis of the aerodynamic performance $P_{a,n}$
- a third unit (105) which is designed such that it determines the wind speed $v_w$ in an inertial system on the basis of the determined horizontal components $(v_{r,x}, v_{r,y})$, the vertical component $(v_{r,z})$, and on the basis of the parameters P1,
- a storage unit (106) for storing the wind speeds $v_w(r_B) = (v_{w,x}(r_B), v_{w,y}(r_B), v_{w,z}(r_B))$ determined for the locations $r_B$, and/or a transmission unit (107) for wireless transmission of the wind speed $v_w(r_B)$ to a receiver.

**2.** Multicopter according to Claim 1,

in which the second unit (104) is designed and configured to solve the following non-linear quadratic minimisation problem for $f$ for a propeller for a total number of $K$ measurements of the aerodynamic performance $P_{a,n}$, where k = 1, ... $K$ and $K \geq 1$:

$$(1) \quad f = \frac{1}{2}F^T F$$

wherein:

$$(2) \quad F(v_{r,x}, v_{r,y}, v_{r,z}, v_{i,1}, v_{h,1}, P_{a,1}, \ldots, v_{i,K}, v_{h,K}, P_{a,K}) = 0,$$

$$(3) \quad F = \left[ F_{1,1}, F_{2,1}, F_{3,1}, \ldots, F_{1,K}, F_{2,K}, F_{3,K} \right],$$

$$(4) \quad F_{1,k} = v_{i,k}^4 - 2v_{i,k}^3 v_{r,z} + v_{i,k}^2 (v_{r,x}^2 + v_{r,y}^2 + v_{r,z}^2) - v_{h,k}^4 = 0$$

$$(5) \quad F_{2,k} = v_{i,k} U_k (v_{i,k} - v_{r,z}) - P_{a,k} / (2\rho A_n) = 0$$

$$(6) \qquad F_{3,k} = v_{h,k}^2 (v_{i,k} - v_{r,z}) - P_{a,k}/(2\rho A_n) = 0$$

$$(7) \qquad U_k = \sqrt{v_{r,x}^2 + v_{r,y}^2 + (v_{i,k} - v_{r,z})^2}$$

where

$A_n$ : area swept by the nth propeller,

$\rho$: air density

$v_{h,k}(P_{a,n,k})$ : induced velocity of the n-th propeller when hovering for the k-th measurement,

$v_{i,k}(P_{a,n,k})$ : velocity induced by the n-th propeller for the k-th measurement.

**3.** Multicopter according to Claim 2,
wherein the second unit (104) is designed and configured in such manner that a determined horizontal component $(v_{r,x}, v_{r,y})$ of the relative velocity $v_r$ is taken into account in the non-linear quadratic minimization problem by the following relationships:

$$(9) \quad F_{4,k} = v_{r,x,k} - v_{r,x} = 0$$

$$(10) \quad F_{5,k} = v_{r,y,k} - v_{r,y} = 0.$$

**4.** Multicopter according to one of Claims 2 to 3,
in which in the first unit (103) the model M1 is based on the following equation of motion or the model M1 can be reduced to the following equation of motion:

$$(11) \quad M\dot{v} + C(v)v + g_M = J^T\tau + \tau_e$$

wherein: $\tau_e = \tau_d(v_r)$ and $v_r = r_B - v_w$

M: generalized mass of the multicopter
$v$: generalized velocity $[r_b{}^T, \omega^T]$
$\omega$: angular velocity of the multicopter
$\dot{v}$: time derivative of $v$

$$C(v): \qquad = \begin{bmatrix} 0_{3x3} & 0_{3x3} \\ 0_{3x3} & -(I\omega)\times \end{bmatrix}$$

$g_M$: weight of the multicopter
$J$: block diagonal of the Jacobian matrix
r: target force screw $[f^T, m^T]$ to be generated by the electric motors $MOT_n$
$\tau_e$: force screw $[f_e{}^T, m_e{}^T]$ acting on the multicopter from the outside
$\tau_d(v_r)$: external force screw generated solely by air friction
$v_r = (v_{r,x}, v_{r,y}, v_{r,z})^T$ velocity of the multicopter relative to the air
$v_w = (v_{w,x}, v_{w,y}, v_{w,z})^T$ wind speed.

**5.** Multicopter according to any one of Claims 1 to 4,
in which a control system for open- and closed-loop controlling of the electric motors $MOT_n$ is present, wherein the control system is designed and configured such that the electric motors $MOT_n$ are controlled so that the projection of the wind speed $v_w$ onto the direction of axes of rotation of the propellers $PROP_n$ is maximised.

**6.** Multicopter according to any one of Claims 1 to 5,
in which, in order to determine the aerodynamic performance $P_{a,n}$ of each electric motor $MOT_n$, a motor current sensor, a motor speed sensor or a motor speed estimator and a unit that determines the aerodynamic performance $P_{a,n}$ based on a predetermined model M2 for describing the propeller dynamics, the detected motor currents and speeds are present.

**7.** Method for measuring a wind speed $v_w$ with a multicopter, wherein the multicopter has a number N of electric motors $MOT_n$ for driving N propellers $PROP_n$, where n = 1, 2, ..., N and $N \geq 2$, including the following steps:

- providing (201) of first time-dependent parameters P1 comprising a 3D position $r_B = (x_B, y_B, z_B)$ of the centre of gravity B of the multicopter, the time derivatives: time derivatives: $\dot{r}_B$ and $\ddot{r}_B$, a 3D orientation $o_M = (\alpha_M, \beta_M, \gamma_M)$ of the multicopter and its time derivative $\dot{o}_M$,
- providing (202) an aerodynamic performance $P_{a,n}$ generated by each of the propellers $PROP_n$,
- determining (203) horizontal components $(v_{r,x}, v_{r,y})$ of a relative velocity $v_r$ of the multicopter to the air on the basis of the first parameters P1 and a model M1 supplied for describing a dynamics of the multicopter as well as an estimate of a force screw $\tau_e$ acting externally on the multicopter which is determined on the basis of the model M1,
- determining (204) the vertical component $(v_{r,z})$ of the relative velocity $v_r$ on the basis of the determined horizontal components $(v_{r,x}, v_{r,y})$ and the aerodynamic performance $P_{a,n}$, determining the wind speed $v_w$ in an inertial system on the basis of the determined relative velocity $v_r := (v_{r,x}, v_{r,y}, v_{r,z})$ and on the basis of the parameters P1, and
- storing (205) the wind speed determined for $r_B$:
$v_w(r_B) := (v_{w,x}(r_B), v_{w,y}(r_B), v_{w,z}(r_B))$ and/or transmitting (206) the wind speed $v_w(r_B) = (v_{w,x}(r_B), v_{w,y}(r_B), v_{w,z}(r_B))$ to a receiver.

**8.** Method according to Claim 7,
in which a control system for controlling the electric motors $MOT_n$ is present, wherein the electric motors $MOT_n$ are controlled such that the projection of the wind speed $v_w$ onto the direction of the axes of rotation of the propellers is maximised.

**9.** Method according to one of Claims 7 to 8,
in which in order to determine the aerodynamic performance $P_{a,n}$ of each electric motor $MOT_n$ a motor current and a motor speed are determined, and the aerodynamic performance $P_{a,n}$ is determined on the basis of a predetermined model M2 for describing the propeller dynamics, the detected motor currents and speeds.

**10.** System comprising two or more multicopters according to any one of Claims 1 to 6,
wherein the multicopters are each designed and configured for exchanging data with each other in a data network, and each multicopter transmits the respectively determined wind speed: $v_w(r_B) = (v_{w,x}(r_B), v_{w,y}(r_B), v_{w,z}(r_B))$ to the other multicopter.

**11.** System according to Claim 10,
wherein the multicopters are designed as agents or softbots for wireless communication in the data network.

**12.** System according to any of Claims 10 to 11,
in which the open- and closed-loop control system for controlling the electric motors $MOT_n$ of the respective multicopter is designed and configured in such manner that wind speeds: $v_w(r_B) = (v_{w,x}(r_B), v_{w,y}(r_B), v_{w,z}(r_B))$ determined and transmitted from the other multicopters are taken into account for closed-loop control.

**13.** System according to any one of Claims 10 to 12,
wherein the multicopters are configured in such manner that they transmit the positions $r_B$ of the centre of gravity B and/or the time derivatives: the time derivatives: $\dot{r}_B$ and/or $\ddot{r}_B$ and/or the 3D orientation $o_M$ and/or its time derivative $\dot{o}_M$ of the respective multicopter and/or the force screws $\tau_e$ acting externally on the respective multicopter and/or the aerodynamic performance $P_{a,n}$ to each of the other multicopters.

**Revendications**

**1.** Multicoptère présentant :

- un certain nombre N de moteurs électriques MOT$_n$ pour l'entraînement de N hélices PROP$_n$, sachant que n = *1, 2, ... N* et *N ≥ 2,*

- une première interface (101) pour la mise à disposition de premiers paramètres P1 comprenant : une position 3D r$_B$ = ($x_B$, $y_B$, $z_B$) du centre de gravité B du multicoptère, les dérivations temporelles : $\dot{r}_B$ et $\ddot{r}_B$, une orientation 3D $o_M$ = ($\alpha_M$, $\beta_M$, $\gamma_M$) du multicoptère et sa dérivation temporelle $\dot{o}_M$,

- une seconde interface (102) pour la mise à disposition d'une puissance aérodynamique $P_{a,n}$ respectivement générée actuellement par les hélices PROP$_n$,

- une première unité (103) qui est conçue pour déterminer, sur la base des premiers paramètres P1 et sur la base d'un modèle M1 mis à disposition pour la description d'une dynamique du multicoptère, et d'une estimation déterminée sur la base du modèle M1 d'un torseur statique $\tau_e$ agissant en externe sur le multicoptère, des composants horizontaux ($v_{r,x}$, $v_{r,y}$) d'une vitesse relative $v_r$:=($v_{r,x}$, $v_{r,y}$, $v_{r,z}$)$^T$ du multicoptère par rapport à l'air,

- une deuxième unité (104) qui est conçue pour, sur la base des composants horizontaux déterminés ($v_{r,x}$, $v_{r,y}$) et sur la base de la puissance aérodynamique $P_{a,n}$, déterminer le composant vertical ($v_{r,z}$) de la vitesse relative $v_r$,

- une troisième unité (105) qui est conçue pour, sur la base des composants horizontaux déterminés ($v_{r,x}$, $v_{r,y}$) du composant vertical ($v_{r,z}$) et, sur la base des paramètres P1, déterminer la vitesse du vent $v_w$ dans un système inertiel,

- une unité de mémoire (106) pour la sauvegarde des vitesses du vent $v_w(r_B)$=($v_{w,x}(r_B)$, $v_{w,y}(r_B)$, $v_{w,z}(r_B)$) déterminée pour les lieux $r_B$ et/ou une unité de transfert (107) pour le transfert sans fil de la vitesse du vent $v_w$ ($r_B$) à un destinataire.

2. Multicoptère selon la revendication 1,
   dans lequel la deuxième unité (104) est conçue et aménagée pour résoudre, pour une hélice, le problème suivant de minimisation quadratique non linéaire pour un certain nombre de *K* mesures au total de la puissance aérodynamique $P_{a,n}$ pour $f$, sachant que k = 1, ... *K* et *K ≥ 1* :

$$(1) \qquad f = \frac{1}{2} F^T F$$

et qu'on a :

$$(2) \qquad F(v_{r,x}, v_{r,y}, v_{r,z}, v_{i,1}, v_{h,1}, P_{a,1}, \ldots, v_{i,K}, v_{h,K}, P_{a,K}) = 0,$$

$$(3) \qquad F = \left[ F_{1,1}, F_{2,1}, F_{3,1}, \ldots, F_{1,K}, F_{2,K}, F_{3,K} \right],$$

$$(4) \qquad F_{1,k} = v_{i,k}^4 - 2v_{i,k}^3 v_{r,z} + v_{i,k}^2 (v_{r,x}^2 + v_{r,y}^2 + v_{r,z}^2) - v_{h,k}^4 = 0$$

$$(5) \qquad F_{2,k} = v_{i,k} U_k (v_{i,k} - v_{r,z}) - P_{a,k} / (2\rho A_n) = 0$$

$$(6) \qquad F_{3,k} = v_{h,k}^2 (v_{i,k} - v_{r,z}) - P_{a,k} / (2\rho A_n) = 0$$

$$(7) \qquad U_k = \sqrt{v_{r,x}^2 + v_{r,y}^2 + (v_{i,k} - v_{r,z})^2}$$

avec

$A_n$ : surface balayée par la nième hélice,

$\rho$ : densité de l'air

$v_{h,k}(P_{a,n,k})$ : vitesse induite de la nième hélice en vol stationnaire par rapport à la *k*ième mesure,

$v_{i,k}(P_{a,n,k})$ : vitesse induite par la nième hélice par rapport à la *k*ième mesure.

**3.** Multicoptère selon la revendication 2,
dans lequel la deuxième unité (104) est conçue et aménagée pour qu'une composante horizontale déterminée ($v_{r,x}$, $v_{r,y}$) de la vitesse relative $v_r$ soit prise en compte dans le problème de minimisation quadratique non linéaire par les corrélations suivantes :

$$(9) \quad F_{4,k} = v_{r,x,k} - v_{r,x} = 0$$

$$(10) \quad F_{5,k} = v_{r,y,k} - v_{r,y} = 0.$$

**4.** Multicoptère selon une des revendications 2 à 3,
dans lequel, dans la première unité (103) l'équation de mouvement suivante est à la base du modèle M1 ou le modèle M1 peut être ramené à l'équation de mouvement suivante :

$$(11) \quad M\dot{v} + C(v)v + g_M = J^T\tau + \tau_e$$

sachant qu'on a $\tau_e = \tau_d(v_r)$ et $v_r = \dot{r}_B - v_w$

$M$ : masse généralisée du multicoptère
$v$ : vitesse généralisée $[r_b{}^T, \omega^T]$
$\omega$ : vitesse angulaire du multicoptère
$\dot{v}$ : dérivation temporelle de v

$$C(v): \quad = \begin{bmatrix} 0_{3x3} & 0_{3x3} \\ 0_{3x3} & -(I\omega)\times \end{bmatrix}$$

$g_M$ : poids du multicoptère
$J$ : diagonale de bloc de la matrice de Jacobi
$\tau$ : torseur statique théorique $[J^T, m^T]$ à générer par les moteurs électriques MOT$_n$
$\tau_e$ : torseur statique $[f_e^T, m_e^T]$ agissant en externe sur le multicoptère
$\tau_d(v_r)$ : torseur statique externe généré exclusivement par le frottement de l'air
$v_r := (v_{r,x}, v_{r,y}, v_{r,z})^T$ vitesse relative du multicoptère par rapport à l'air
$v_w := (v_{w,x}, v_{w,y}, v_{w,z})^T$ vitesse du vent.

**5.** Multicoptère selon une des revendications 1 à 4,
dans lequel un système de commande servant à commander et à régler les moteurs électriques MOT$_n$ est disponible, le système de commande étant conçu et aménagé pour que les moteurs électriques MOT$_n$ soient réglés de manière à ce que la projection de la vitesse du vent $v_w$ sur la direction des axes de rotation des hélices PROP$_n$ soit maximisée.

**6.** Multicoptère selon une des revendications 1 à 5,
dans lequel sont disponibles, pour déterminer la puissance aérodynamique $P_{a,n}$ par moteur électrique MOT$_n$, un capteur de courant de moteur, un capteur de régime de moteur ou un évaluateur de régime de moteur et une unité qui, sur la base d'un modèle prédéfini M2 pour la description de la dynamique des hélices, des courants et régimes de moteur détectés, détermine la puissance aérodynamique $P_{a,n}$.

**7.** Procédé de mesure d'une vitesse du vent $v_w$ avec un multicoptère, le multicoptère présentant un certain nombre N de moteurs électriques MOT$_n$ pour l'entraînement de N hélices PROP$_n$, sachant que n = 1, *2, ... N et N* $\geq$ 2, comportant les étapes suivantes :

- mise à disposition (201) de premiers paramètres à dépendance temporelle P1 comprenant : une position 3D $r_B = (x_B, y_B, z_B)$ du centre de gravité B du multicoptère, les dérivations temporelles : $\dot{r}_B$ et $\ddot{r}_B$, une orientation 3D $O_M = (\alpha_M, \beta_M, \gamma_M)$ du multicoptère et la dérivation temporelle $\dot{o}_M$,
- mise à disposition (202) d'une puissance aérodynamique $P_{a,n}$ respectivement générée actuellement par les

hélices PROP$_n$,

- sur la base des premiers paramètres P1 et d'un modèle M1 mis à disposition pour la description d'une dynamique du multicoptère, et d'une estimation déterminée sur la base du modèle M1 d'un torseur statique $\tau_e$ agissant en externe sur le multicoptère, détermination (203) de composants horizontaux ($v_{r,x}$, $v_{r,y}$) d'une vitesse relative $v_r$ du multicoptère par rapport à l'air,

- sur la base des composants horizontaux déterminés ($v_{r,x}$, $v_{r,y}$) de la puissance aérodynamique $P_{a,n}$, détermination (204) du composant vertical ($v_{r,z}$) de la vitesse relative $v_r$, sur la base de la vitesse relative déterminée $v_r := (v_{r,x}, v_{r,y}, v_{r,z})^T$ et sur la base des paramètres P1, détermination de la vitesse du vent vw dans un système inertiel, et

- sauvegarde (205) de la vitesse du vent $v_w(r_B) := (v_{w,x}(r_B), v_{w,y}(r_B), v_{w,z}(r_B))$ déterminée pour $r_B$ et/ou transfert (206) de la vitesse du vent $v_w(r_B) = (v_{w,x}(r_B), v_{w,y}(r_B), v_{w,z}(r_B))$ à un destinataire.

8. Procédé selon la revendication 7,
   dans lequel un système de commande est prévu pour commander et régler les moteurs électriques MOT$_n$, les moteurs électriques MOT$_n$ étant réglés de manière à ce que la projection de la vitesse du vent $v_w$ en direction des axes de rotation des hélices soit maximisée.

9. Procédé selon une des revendications 7 à 8,
   dans lequel, pour déterminer la puissance aérodynamique $P_{a,n}$ par moteur électrique MOT$_n$, un courant de moteur et un régime de moteur sont déterminés et, sur la base d'un modèle prédéfini M2 pour la description de la dynamique des hélices, des courants et régimes de moteur déterminés, la puissance aérodynamique $P_{a,n}$ est déterminée.

10. Système comprenant deux multicoptères ou plus selon une des revendications 1 à 6,
    dans lequel les multicoptères sont réalisés et aménagés respectivement pour un échange de données entre eux dans un réseau de données et les multicoptères transmettent la vitesse respectivement déterminée du vent $v_w(r_B) = (v_{w,x}(r_B), v_{w,y}(r_B), v_{w,z}(r_B))$ aux autres multicoptères respectifs.

11. Système selon la revendication 10,
    dans lequel les multicoptères sont réalisés sous forme d'agents ou de Softbot pour une communication sans fil dans un réseau de données.

12. Système selon une des revendications 10 à 11,
    dans lequel le système de commande et de réglage des moteurs électriques MOTn du multicoptère respectif est réalisé et aménagé de manière à ce que les vitesse déterminées du vent vw(rβ)=(vw,x(rβ), vw,y(rβ), vw,z(rβ)) transférées par les autres multicoptères soient prises en compte pour le réglage.

13. Système selon une des revendications 10 à 12,
    dans lequel les multicoptères sont aménagés de manières à transmettre les positions $r_B$ du centre de gravité B et/ou les dérivations temporelles : $\dot{r}_B$ et $\ddot{r}_B$ et/ou l'orientation 3D $o_M$ et/ou sa dérivation temporelle $\dot{o}_M$ du multicoptère respectif et/ou le torseur statique $\tau_e$ agissant en externe sur les multicoptères respectifs et/ou la puissance aérodynamique $P_{a,n}$ aux autres multicoptères respectifs.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8219267 B2

**In der Beschreibung aufgeführte Nicht-Patentliteratur**

- Simultaneous Estimation of Aerodynamic and Contact Forces in Flying Robots: Application to Metric Wind Estimations and Collision Detection. *ICRA 2015, Seattle, WA USA,* Mai 2015, 5290-5296

- **VON BANGURA M. et al.** Aerodynamic Power Control for Multirotor Aerial Vehicles. *IEEE International Conference on Robotics and Automation (ICRA),* 31. Mai 2014
- **TOMIC T.** Evaluation of acceleration-based disturbance observation for multicopter control. *European Control Conference (ECC),* 2014, 2937-2944